# EUROPÄISCHE PATENTSCHRIFT

(11) **EP 1 839 781 B1**
(45) Veröffentlichungstag und Bekanntmachung des Hinweises auf die Patenterteilung: **21.10.2015**
(21) Anmeldenummer: 07006390.4
(22) Anmeldetag: 28.03.2007
(51) Int. Cl.: B22F 3/105, B29C 67/00

(54) **Vorrichtung zur Herstellung von Gegenständen durch schichtweises Aufbauen aus pulverförmigem Werkstoff**
Device for manufacturing objects by layered construction using a powdery substance
Dispositif de fabrication d'objets par montage en couche à partir de matière première en poudre

(30) Priorität: 30.03.2006 DE 102006014835
(43) Veröffentlichungstag der Anmeldung: 03.10.2007
(73) Patentinhaber: Fockele, Matthias, 33178 Borchen (DE)
(72) Erfinder: Fockele, Matthias, 33178 Borchen (DE)
(74) Vertreter: Weickmann & Weickmann

(56) Entgegenhaltungen:
- EP-A- 0 357 917
- WO-A-92/08592
- WO-A-95/34468
- WO-A-2006/125507
- WO-A-2007/112808
- DE-A1- 2 637 559
- DE-A1-102004 041 633
- DE-A1-102005 014 483
- DE-C1- 19 649 865
- DE-C1- 19 853 947
- US-A- 4 259 098
- PRATT R P ET AL: "APPLICATION OF CIRCULAR FILTER INSERTS" NUCLEAR TECHNOLOGY, AMERICAN NUCLEAR SOCIETY, CHICAGO, IL, US, Bd. 92, Nr. 1, 1. Oktober 1990 (1990-10-01), Seiten 30-39, XP000175142 ISSN: 0029-5450

## Beschreibung

Die Erfindung betrifft eine Vorrichtung zur Herstellung von Gegenständen durch schichtweises Aufbauen aus pulverförmigem, insbesondere metallischem oder/und keramischem Werkstoff, umfassend ein Prozessraumgehäuse mit einem Prozessraum, eine Trägeranordnung als Basis für den Schichtaufbau und zur Bereitstellung eines Baufeldes in dem Prozessraum, eine Bestrahlungseinrichtung mit dem Baufeld oben gegenüberliegenden Komponenten zur Bestrahlung der jeweils zuletzt auf der Trägeranordnung präparierten Werkstoffpulverschicht in einem dieser Schicht zugeordneten Querschnittsbereich des betreffenden herzustellenden Gegenstandes mit Strahlung, die das Werkstoffpulver in diesem Querschnittsbereich durch Erhitzen zum Verschmelzen oder ggf. zum Versintern bringt, und eine Schutzgasfördereinrichtung zum Durchleiten von Schutzgas durch den Prozessraum, eine Schichtenpräparierungseinrichtung zum Präparieren einer jeweils nachfolgend mittels der Bestrahlungseinrichtung ortsselektiv zu bestrahlenden Schicht des pulverförmigen Werkstoffs, wobei die Schichtenpräparierungseinrichtung einen im Abstand der gewünschten Pulverschichtdicke über der zuletzt bestrahlten Schicht hinweg bewegbaren Glättungsschieber zur Einebnung einer jeweiligen Menge an Werkstoffpulver über der zuletzt bestrahlten Schicht aufweist.

Zum Stand der Technik derartiger Vorrichtungen kann z. B. auf die DE 199 05 067 A1, die DE 102 36 907 A1, die DE 102 08 150 A1, die DE 101 12 591 A1 oder die DE 196 49 865 A1, DE 10 2004 041 633 A1, DE 10 2005 014 483 A1 verwiesen werden.

Unter den Begriffen selektives Laserschmelzen, selektives Pulverschmelzen, selektives Lasersintern u. dgl. sind in jüngerer Zeit leistungsfähige Methoden zur Herstellung von Gegenständen auch komplizierterer Geometrie bekannt geworden, wobei diese häufig unter dem Begriff "Rapid Prototyping" oder "Rapid Tooling" oder "Rapid Manufacturing" zusammengefassten Methoden im Wesentlichen auf folgendem Prinzip basieren:
Der herzustellende Gegenstand wird nach Maßgabe von CAD-Daten bzw. von davon abgeleiteten geometrischen Beschreibungsdaten schichtweise aus einem feinkörnigen, pulverigen Rohmaterial aufgebaut, in dem das Rohmaterial entsprechend einem der jeweiligen Schicht zugeordneten Querschnittsmuster des Gegenstandes durch ortsselektives Bestrahlen verfestigt bzw. verschmolzen wird. Das Bestrahlen erfolgt normalerweise mittels Laserstrahlung, wobei die Steuerung einer den Laserstrahl ablenkenden Strahlablenkeinrichtung mittels einer Steuereinrichtung auf der Basis geometrischer Beschreibungsdaten des herzustellenden Gegenstandes erfolgt. Die Steuerinformationen werden üblicherweise von einem Mikrocomputer nach Maßgabe eines entsprechenden Programms aus CAD-Daten abgeleitet und bereitgestellt.

Der Laserstrahl zeichnet auf der zuletzt präparierten Rohmaterialschicht das dieser Schicht zugeordnete Querschnittsmuster des Gegenstandes, um das Rohmaterial dem Querschnittsmuster entsprechend selektiv zu verschmelzen. Nach einem solchen Bestrahlungsschritt erfolgt dann üblicherweise die Präparation der nächsten Werkstoffpulverschicht auf der zuletzt durch Bestrahlen selektiv und bereichsweise verschmolzenen Schicht. Nach Ausbildung einer an ihrer Oberfläche hinreichend glatten Werkstoffpulverschicht erfolgt dann wieder ein Bestrahlungsschritt in der vorstehend erläuterten Weise. Der Gegenstand entsteht somit Schicht für Schicht, wobei die aufeinander folgend hergestellten Querschnittsschichten des Gegenstandes so miteinander verschmolzen sind, dass sie aneinander haften. Als Pulvermaterialien kommen diverse Metalle in Frage, darunter z. B. Stahl, Titan, Gold, Tantal. Auch keramisches Werkstoffpulver kann beim selektiven Laserschmelzen eingesetzt werden. Ferner sind mit der Methode des selektiven Laserschmelzens nahezu alle erdenklichen Formen von Gegenständen herstellbar, wodurch sie für die Herstellung von kompliziert geformten Maschinenelementen, Prothesen, Schmuckstücken usw. prädestiniert ist.

Die jeweilige Einstellung des Schichtniveaus relativ zur Strahlungsquelle bzw. zur Strahlablenkeinrichtung erfolgt normalerweise durch entsprechendes Absenken einer Plattform, welche einen Träger bildet, auf der der Gegenstand schichtweise aufgebaut wird. Beim selektiven Laserschmelzen erfolgt das Bestrahlen des eingesetzten Werkstoffpulvers üblicherweise unter Schutzgasatmosphäre, z.B. Argonatmosphäre, insbesondere um Oxidationseffekte zu unterdrücken. Es ist bekannt, den Prozessraum während der Durchführung des Verfahrens des selektiven Laserschmelzens kontinuierlich mit Schutzgas zu spülen, indem an einer Seite des Prozessraums Schutzgas eingelassen wird, welches an der gegenüberliegenden Prozessraumgehäuseseite wieder moderat abgesaugt wird. Das abgesaugte Schutzgas kann in einem Kreislauf dem Prozessraum wieder zugeführt werden.

Bekannte Vorrichtungen der eingangs genannten Art zur Herstellung von Gegenständen durch schichtweises Aufbauen aus pulverförmigem Werkstoff haben auch eine Schichtenpräparierungseinrichtung zum Präparieren einer jeweils nachfolgend mittels der Bestrahlungseinrichtung ortsselektiv zu bestrahlenden Schicht des pulverförmigen Werkstoffs, wobei die Schichtenpräparierungseinrichtung einen im Abstand der gewünschten Pulverschichtdicke über der zuletzt bestrahlten Schicht hinweg bewegbaren Glättungsschieber zur Einebnung einer jeweiligen Menge an Werkstoffpulver über der zuletzt bestrahlten Schicht aufweist. Zum Stand der Technik wird auf die oben bereits genannten Dokumente verwiesen.

Bei den bekannten Schichtenpräparierungseinrichtungen werden die Glättungsschieber im Prozessraum mittels Linearantrieben an Schienenführungen vor- und zurückbewegt.

Aufgabe der Erfindung ist es daher, eine Vorrichtung der eingangs genannten Art mit einer verbesserten Schichtenpräparierungseinrichtung bereitzustellen.

Zur Lösung dieser Aufgabe wird gemäß Anspruch 1 eine Vorrichtung zur Herstellung von Gegenständen durch schichtweises Aufbauen aus pulverförmigem, insbesondere metallischem oder/und keramischem Werkstoff vorgeschlagen, die eine vergleichsweise einfach aufgebaute und sehr zuverlässig funktionierende Schichtenpräparierungseinrichtung zum Präparieren einer jeweils nachfolgend mittels der Bestrahlungseinrichtung ortsselektiv zu bestrahlenden Schicht des pulverförmigen Werkstoffs aufweist, wobei der Glättungsschieber dieser Schichtenpräparierungseinrichtung an einem radial von einer vertikalen Schwenkachse abstehenden und um die Schwenkachse schwenkbaren Halter vorgesehen ist.

Der Schwenkantriebsmotor des Halters kann z.B. außerhalb des Prozessraumgehäuses vorgesehen sein und über eine abgedichtet durch eine Prozessraumgehäusewand geführte Antriebswelle oder dgl. mit dem Halter im Prozessraum verbunden sein.

Vorzugsweise hat der Halter einen Pulverspender zur Abgabe von Werkstoffpulver, der bei den Schwenkbewegungen des Halters über das Baufeld geführt wird, um Werkstoffpulver abzugeben. Der Pulverspender kann z.B. ein Wechselbehälter sein, der in eine Wechselbehälteraufnahme des Halters lösbar eingesetzt ist. Das Wechseln des Pulverspenders oder ggf. das Nachfüllen von Pulver kann z.B. ebenfalls mit einem Dichthandschuh der oben angesprochenen Art von einer Bedienungsperson manuell vorgenommen werden. Ein Pulvervorrat bzw. ein gefüllter Wechselbehälter kann für diesen Zweck im Prozessraum deponiert worden sein. Es ist somit bei Wechsel des Pulverspenders keine Aufhebung der Schutzgasatmosphäre erforderlich. Darauf hinzuweisen ist noch, dass am Prozessraumgehäuse Schleusenkammern vorgesehen sein können, welche einerseits zum Prozessraum hin und andererseits nach außen hin mit wahlweise zu öffnenden und zu schließenden Türen oder dgl. versehen sind und bedarfsweise mit Schutzgas gespült werden können, so dass Gegenstände von außen über die Schleusenkammer in den Prozessraum eingebracht - oder aus dem Prozessraum herausgeholt werden können, ohne dass im Prozessraum die Schutzgasatmosphäre aufgehoben bzw. gestört werden müsste.

Vorzugsweise weist der Pulverspender an seinem unteren Ende Elemente des Glättungsschiebers auf, etwa eine Leiste aus Silikon oder dgl., die bei der Bewegung des schwenkbaren Halters das Pulver auf dem Baufeld einebnet.

Der Prozessraumgehäuseboden kann eine Öffnung zur Ableitung überschüssigen Werkstoffpulvers zu einem nach außen abgedichtet an der Öffnung angeschlossenen Sammelbehälter aufweisen. Nach Beendigung eines Bauprozesses kann eine Bedienungsperson dann ggf. sämtliches überschüssiges Pulver manuell durch die genannte Öffnung in den Sammelbehälter einbringen.

Die Erfindung wird im Folgenden unter Bezugnahme auf die Figuren näher erläutert.
- Fig. 1: zeigt eine eher schematische Darstellung einer Vorrichtung zur Herstellung von Gegenständen nach der Erfindung in einer Schnittdarstellung in Vorderansicht mit der in Fig. 2 bei I-I angedeuteten Schnittebene.
- Fig. 2: zeigt eine Schnittseitenansicht der Vorrichtung aus Fig. 1 mit der in Fig. 1 bei II-II angedeuteten Schnittebene.
- Fig. 3: zeigt in einer perspektivischen Darstellung die Außenansicht eines Ausführungsbeispiels einer Vorrichtung nach der Erfindung.
- Fig. 4: zeigt ein in dem in Fig. 3 dargestellten Außengehäuse untergebrachtes Prozessraumgehäuse mit angebauter Filteranordnung und aufgesetztem Optikmodul in einer perspektivischen Darstellung.
- Fig. 5: zeigt das Prozessraumgehäuse aus Fig. 4 in einer Ansicht von vorn mit entfernter Fronttür.
- Fig. 6: zeigt eine Innenansicht des Prozessraumes mit Blick auf den Prozessraumboden und eine Draufsicht auf die Filteranordnung.
- Fig. 7: zeigt die Filteranordnung in einer Seitenansicht.
- Fig. 8: zeigt die Filteranordnung aus Fig. 7 in einer Schnittseitenansicht.
- Fig. 9: zeigt in einer perspektivischen Darstellung eine Schichtenpräparierungseinrichtung nach der Erfindung.
- Fig. 10: zeigt einen Pulverbehälter der Schichtenpräparierungseinrichtung aus Fig. 7.

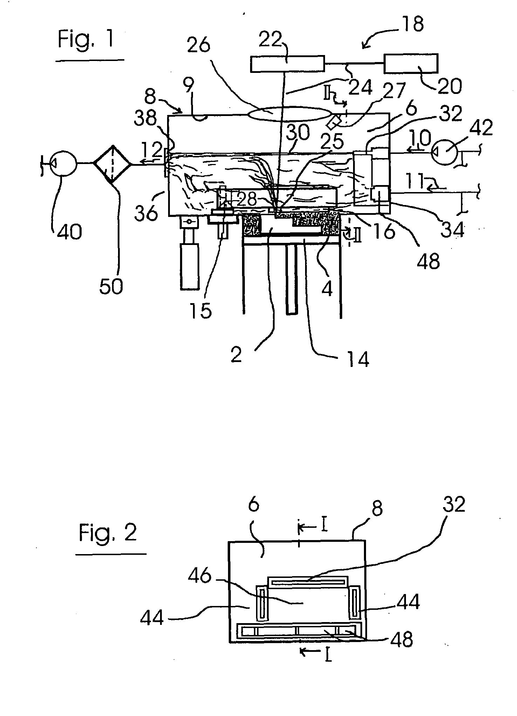

Die Erläuterungsskizze gemäß Fig. 1 zeigt eine Momentaufnahme bei der Herstellung eines Gegenstandes 2 durch schichtweises Aufbauen aus einem Pulver 4, z.B. Titanpulver mit einer Körnung von z.B. 10 µm - 60 µm oder Stahlpulver bzw. Keramikpulver entsprechender Körnung. Der Aufbau des Gegenstandes 2 erfolgt in einem Prozessraum 6, welcher von dem Prozessraumgehäuse 8 begrenzt ist. In dem Prozessraum 6 herrscht Schutzgasatmosphäre, vorzugsweise Argon-Atmosphäre, wobei die Pfeile 10 und 11 in Fig. 1 die Schutzgaszuleitung - und der Pfeil 12 die Schutzgasableitung andeuten. Das schichtweise Aufbauen des Gegenstandes 2 erfolgt auf einer Trägerplattform 14, welche mittels einer Vertikalantriebseinheit vertikal bewegbar und in verschiedenen Vertikaleinstellungen positionierbar ist. Eine Schichtenpräparierungseinrichtung 15 mit einem Glättungsschieber 16 dient zur Präparierung und Einebnung einer neuen Pulverschicht auf der jeweils zuletzt bestrahlten Pulverschicht, wobei der Glättungsschieber 16 in einem vertikalen Abstand entsprechend der gewünschten Pulverschichtdicke zu der zuletzt bestrahlten Schicht horizontal über die Trägerplattform 14 und somit über das Baufeld hinweg bewegt wird. Nach der Präparierung einer solchen Pulverschicht kommt dann die Bestrahlungseinrichtung 18 aus Laservorrichtung 20 und Strahlablenkeinheit 22 zum Einsatz, um das Pulver an den vorbestimmten Stellen entsprechend dem der Pulverschicht zugeordneten Querschnitt des herzustellenden Gegenstandes durch Bestrahlen umzuschmelzen. Im Beispielsfall wird der Laserstrahl 24 durch eine f-θ-Linse 26 hindurch in den Prozessraum 6 eingebracht, wobei die Linse 26 auch als Fenster des Gehäuses 8 dient. Die Trägerplattform 14 kann mit einer Heizvorrichtung zum Heizen des Pulverbettes ausgestattet sein. Vorzugsweise handelt es sich dabei um eine elektrische Widerstandsheizung.

Mit 27 ist in Fig. 1 eine Kamera bezeichnet, die zur Prozessraumüberwachung und insbesondere zur Qualitätskontrolle der jeweils frisch präparierten Werkstoffpulverschicht und ggf. der jeweils durch Umschmelzen des Pulvers verfestigten Bereiche dient. Die von der Kamera 27 bereitgestellten Bilddaten werden vorzugsweise mittels bildverarbeitender Programme ausgewertet.

Ein Problem bei dem Bauprozess eines Gegenstandes 2 ist die unbeabsichtigte Erzeugung von Prozessrauch 28 durch Verdampfungseffekte beim Umschmelzen des Pulvers 4. Dieser Prozessrauch steigt normalerweise von dem Strahlauftreffpunkt des Laserstrahls 24 auf dem Baufeld 25 nach oben hin auf. Bei den bisher bekannten Vorrichtungen der hier betrachteten Art hat sich der Prozessrauch teilweise als Kondensat an der Decke 9 des Prozessraumgehäuses 8 und dabei auch an optischen Komponenten, wie etwa der Fensterlinse 26 abgesetzt, wenngleich ein Teil des Prozessrauchs auch mit dem Schutzgas aus dem Prozessraum 6 abgeleitet wurde. Wie oben schon näher erläutert, hat das Prozessrauchkondensat zu einer Verschmutzung von Prozessraumgehäusewänden und zu einer Eintrübung optischer Komponenten der Vorrichtung geführt. Es wird diesbezüglich Abhilfe geschaffen, indem eine Trennzone 30 zwischen dem Baufeld 25 und der dem Baufeld 25 gegenüberliegenden Seite 9 des Prozessraumgehäuses erzeugt wird, wobei diese Trennzone 30 aus einer schnellen Schutzgasströmungsschicht gebildet wird, die für den Prozessrauch 28 im Wesentlichen undurchdringlich ist. Der Prozessrauch 28 wird somit daran gehindert, zur Prozessraumdecke 9 und zu den optischen Komponenten, wie etwa der Linse 26, aufzusteigen. Die Schutzgasströmungsschicht 30 im Prozessraum 6 sorgt dafür, dass der Prozessrauch zum weitaus überwiegenden Teil aus dem Prozessraum 6 herausgeführt wird. Zur Erzeugung der Trennzone 30 dienen die im Wesentlichen horizontal ausgerichtete Düse 32 an der Prozessraumseite 34 und die der Düse 32 in im Wesentlichen gleicher Höhe auf der Prozessraumseite 36 diametral gegenüberliegende Auslassöffnungsanordnung 38, welche Auslassöffnungen aufweist, durch die hindurch das Schutzgas mittels eines vakuumdichten Seitenkanalgebläses 40 aus dem Prozessraum 6 abgesaugt wird.

Der horizontal breitgezogenen Düse 32 wird das Schutzgas unter erhöhtem Druck von einem Kompressor 42 zugeführt. Die Düse 32 ist vorzugsweise so ausgestaltet, dass sie das Schutzgas unter Bildung einer zumindest annähernd laminaren Schutzgasströmung in den Prozessraum 6 einleitet.

In diesem Zusammenhang sei darauf hingewiesen, dass es nicht unbedingt darauf ankommt, dass die Schutzgasströmungsschicht 30 über ihre gesamte Länge von der Düse 32 bis zur Auslassöffnungsanordnung 38 eine konstante Schichtdicke aufweist. In der Praxis kann es durchaus vorkommen, dass die Schichtdicke der Trennzone 30 mit zunehmendem Abstand von der Düse 32 größer wird, so dass sich ein keilförmiger Querschnitt der Trennzone ausbildet. Wichtig ist allerdings, dass der Bereich 30 der schnellen Schutzgasströmung einen so großen Abstand vom Baufeld 25 hat, dass das schnell strömende Schutzgas keine Aufwirbelung bzw. Bewegung des Pulvers verursacht. Um dies sicherzustellen, kann es durch entsprechende Anordnung der Auslassöffnungen 38 relativ zur Düse 32 vorgesehen sein, dass die Trennzone 30 von der Düse 32 ausgehend schräg nach oben zum (höher liegenden) Auslass orientiert ist.

Wie in Fig. 2 deutlicher zu erkennen ist, sind zwei vertikal installierte Düsen 44 seitlich und unterhalb der Düse 32 in der Weise vorgesehen, dass sie zwei auf Vertikalebenen liegende Trennzonen in Form von Schutzgasströmungsschichten erzeugen können, die zusammen mit der Trennzone 30 einen in Fig. 2 mit 46 angedeuteten "Schutztunnel" zur Ableitung von Prozessrauch bilden. Die Düsen 44 sind ebenfalls an dem Kompressor 42 angeschlossen. Anstelle der Düse 32 bzw. anstelle der Düsen 44 können jeweils mehrere Düsen vorgesehen sein, die gemeinsam eine breite Schutzgasströmungsschicht als Trennzone bilden.

Auf der Prozessraumseite 34 sind ferner unterhalb der Düse 32 weitere Schutzgaseinlässe 48 vorgesehen, durch die hindurch Schutzgas mit vergleichsweise kleinerem Druck in den Prozessraum 6 eingeleitet wird, um eine Schutzgasatmosphäre über dem Baufeld 25 zu erzeugen und aufrechtzuerhalten. Druck und Strömungsgeschwindigkeit dieses Schutzgaspolsters sind so eingestellt, dass es nicht zu Aufwirbelungen des Werkstoffpulvers kommen kann. Das mittels der Schutzgaseinlässe 48 eingeführte Schutzgas tritt durch die Auslassöffnungsanordnung 38 aus dem Prozessraum 6 aus. Vorzugsweise ist der Prozessraum 6 in einen Schutzgaskreislauf integriert, bei dem das über die Auslassöffnungsanordnung 38 aus dem Prozessraum 6 mittels der Gebläseanordnung 40 herausgeförderte Schutzgas über betreffende Kreislaufleitungen wieder zu dem Einlass 48 und über den Kompressor 42 ferner zu den Düsen 32, 44 geführt wird, um es wieder in den Prozessraum 6 einzubringen. Eine Filteranordnung 50 in unmittelbarer Nähe der Schutzgasauslassanordnung 38 dient zur Filterung des abgepumpten Schutzgases und somit auch insbesondere zur Aussonderung von Prozessrauchkondensat. Zur Regelung der Schutzgasströmung durch den Prozessraum 6 hindurch kann als Überwachungsparameter z.B. die Differenz der Drucke unmittelbar vor und unmittelbar nach der Filteranordnung 50 erfasst werden.

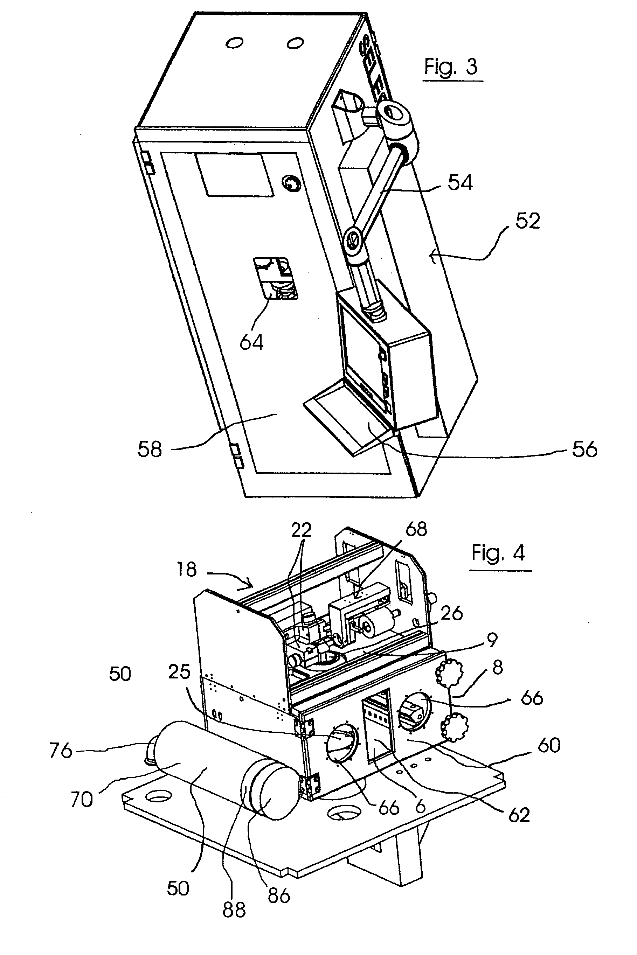

In den Figuren 3 - 10 sind ein konkretes Ausführungsbeispiel der Erfindung sowie Komponenten davon gezeigt. In Fig. 3 ist das Schrankgehäuse 52 der Vorrichtung mit einer an einem Gelenkarm 54 hängenden Bedienkonsole 56 erkennbar. Die Bedienkonsole steht mit einer elektronischen Steuereinrichtung in Verbindung, mittels welcher die jeweiligen Bauprozesse gesteuert werden. Die Fronttür 58 kann geöffnet werden, um Zugriff auf das eigentliche Prozessraumgehäuse 8 zu ermöglichen, das in Fig. 4 besser erkennbar ist.

Das Prozessraumgehäuse 8 hat eine Fronttür 60 mit einem Sichtfenster 62, das mit dem Sichtfenster 64 des Gehäuses 52 (Fig. 3) fluchtet und mittels einer durchsichtigen Scheibe dicht verschlossen ist. Die Löcher 66 in der Fronttür 60 sind Durchgriffsöffnungen. Diese Durchgriffsöffnungen 66 sind normalerweise von (in den Fig. nicht gezeigten) Handschuhen abgedichtet, mit denen eine Bedienungsperson in den Prozessraum 6 eingreifen kann (Handschuhbox-Prinzip).

Auf dem Prozessraumgehäuse 8 befindet sich die Bestrahlungseinrichtung 18 mit einer elektronisch gesteuerten Scanneranordnung 22, der f-θ-Linse 26 in der oberen Begrenzungswand 9 des Prozessraumgehäuses 8 und einer Gruppe von optischen Komponenten 68 zur Einkopplung des Laserlichtes in die Scanneranordnung 22.

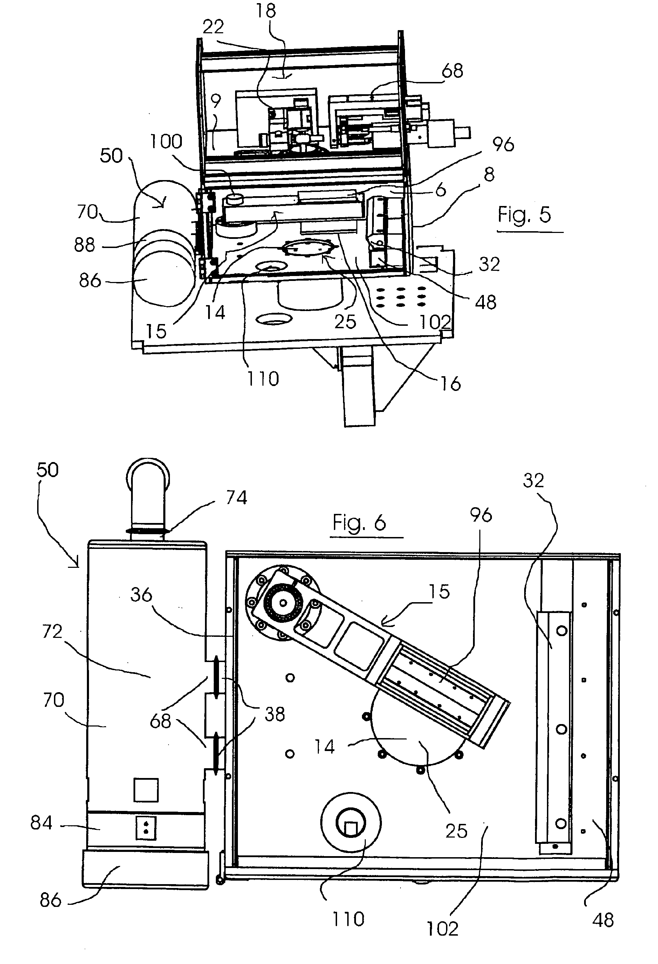

Fig. 4 zeigt auch die seitlich an dem Prozessraumgehäuse 8 angebrachte Filteranordnung 50. Die Filteranordnung 50 ist mit ihren Schutzgaseinlassöffnungen 68 an den Schutzgasauslassöffnungen 38 an der Prozessraumseite 36 (vgl. Fig. 6) angeschlossen. Die Schutzgaseinlassöffnungen 68 sind radial an dem Filtergehäusemantel 70 des hohlzylindrisch ausgebildeten Filtergehäuses 72 vorgesehen. Die Schutzgasauslassöffnung 74 des Filtergehäuses 70 befindet sich an der hinteren Stirnseite 76. An der Schutzgasauslassöffnung 74 ist ein regelbares Seitenkanalgebläse (nur in Fig. 1 bei 40 gezeigt) angeschlossen, welches durch die Filteranordnung 50 hindurch Schutzgas aus dem Prozessraum 6 absaugt.

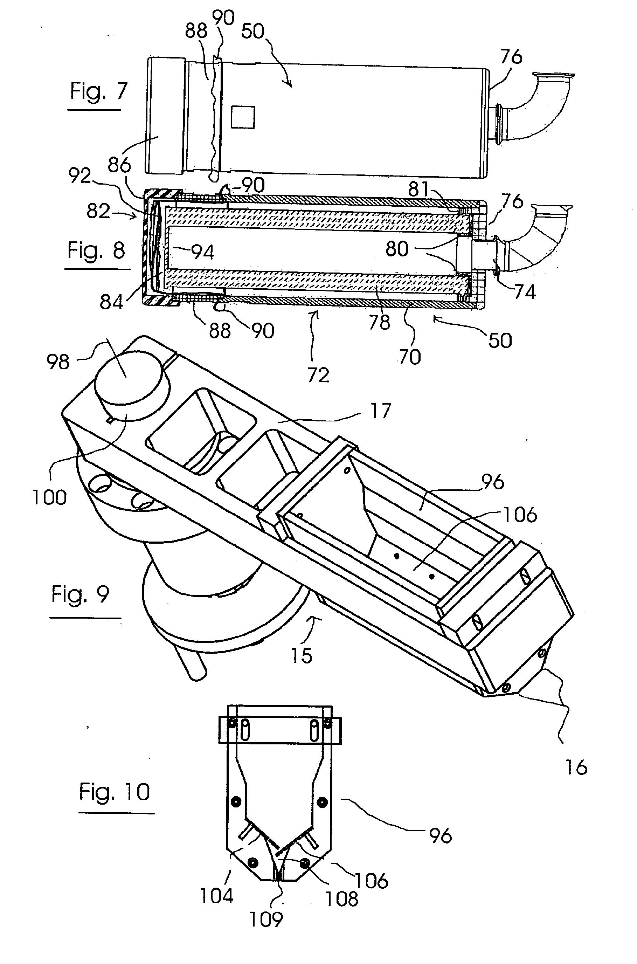

In Fig. 7 und Fig. 8 ist die Filteranordnung 50 detaillierter dargestellt. Aus Fig. 8 ist ersichtlich, dass das eigentliche feinporige Filterelement 78 ein hohlzylindrischer Körper ist, welcher in dem Filtergehäuse 70 koaxial dazu aufgenommen ist und mit seiner offenen Stirnseite innen an der Stirnwand 76 des Filtergehäuses 70 anliegt und dort fixiert ist, etwa durch eine Steckverbindung oder ggf. Verschraubung 80. An der der Auslassöffnung 74 entfernten Stirnseite 82 weist das Filtergehäuse 72 eine Zugriffsöffnung 84 auf, die mittels eines Schraubdeckels 86 verschlossen ist. Dieser Schraubdeckel 86 ist in der Darstellung gemäß Fig. 8 mit einem Zwischenring 88 verschraubt, der seinerseits axial auf dem Zylindermantel 70 aufgesetzt ist, so dass er eine axiale Verlängerung des Zylindermantels 70 bildet. Wie bei 90 in Fig. 10 angedeutet, ist an der Verbindungsstelle zwischen dem Klemmring 88 und dem Zylindermantelelement 70 der Randbereich 90 eines in dem Filtergehäuse 72 aufgenommenen schlauchartigen Beutels 92 abgedichtet eingeklemmt. Der Klemmring 88 und der Zylindermantel 70 sind mittels einer äußeren Klemmanordnung (nicht gezeigt) aneinander fixiert, wobei die Klemmanordnung bedarfsweise lösbar ist, um den Klemmring 88 von dem Zylindermantelteil 70 freizugeben.

Der Vorgang des Wechselns des Filterelements 78 kann folgendermaßen durchgeführt werden. Während der vom Zylindermantel 70 umgebene Bereich des Filtergehäuses 72 noch Schutzgasatmosphäre aufweist und somit das Filterelement 78 in dieser Schutzgasatmosphäre sich befindet, wird der Verschlussdeckel 86 von dem Klemmring 88 abgeschraubt, so dass ein Zugriff auf den Beutel 92 an der Zugriffsöffnung 84 möglich ist. Eine Bedienungsperson kann dann das Filterelement 78 an dessen Rückseite ergreifen, wobei jedoch zwischen der Hand der Bedienungsperson und dem Filterelement 78 die Wand des Beutels 92 verbleibt. Die Bedienungsperson kann dann das Filterelement 78 aus der Fixierung an der Stirnseite 76 des Filtergehäuses 72 lösen und in den Beutel 92 aufnehmen. Dabei bleibt die Schutzgasatmosphäre in dem Beutel 92 aufrechterhalten, da das Innere des Beutels nach wie vor nicht mit der Außenluftatmosphäre in Verbindung gekommen ist. Nach vollständigem Herausziehen des Filterelements 78 aus dem Filtergehäuse 72 kann die Bedienungsperson dann den Filterbeutel 92 mit geeigneten Mitteln, etwa mit einem Verschlussclip, einem Kabelbinder oder dgl., dicht verschließen, und zwar an einer von dem Beutelrand 90 etwas entfernten Stelle. Sodann kann der Klemmring 88 vom Mantelelement 70 abgenommen werden, um das über die neugebildete Verschlussstelle abstehende Beutelende 90 freizugeben. Mit 81 ist in Fig. 8 ein am Filterelement 78 angeordneter Bürstenring oder Abstreifring bezeichnet, welcher beim Herausziehen des Filterelementes 78 aus dem Filtergehäuse 72 die Innenfläche des Zylindermantels 70 von Rückständen säubert, so dass auch solche Rückstände in Schutzgasatmosphäre in die Filtertüte 92 eingebracht werden. Der Beutel 92 mit dem darin in Schutzgasatmosphäre aufgenommenen Filterelement 78 kann dann entsorgt und ggf. der Wiederaufbereitung des Filterelements 78 zugeführt werden. Diese Art der Sicherung des Filterelements 78 ist aus Sicherheitsgründen zu empfehlen, wenn es zu befürchten ist, dass sich reaktives Prozessrauchkondensat im Filterelement 78 gesammelt hat, wie dies etwa bei der Verarbeitung von Titanpulver auftreten kann. In diesem Zusammenhang ist darauf hinzuweisen, dass im Hinblick auf diesen Sicherheitsaspekt auch die mittels der Trennzone 30 gebündelte und den Prozessrauch mitführende Schutzgasströmung aus dem Prozessraum 6 zu der nahe am Prozessraumgehäuse vorgesehenen Filteranordnung 50 sehr vorteilhaft ist.

Das Bestücken der Filteranordnung 50 mit einem neuen Filterelement 78 erfolgt durch Einsetzen des Filterelements 78 in den Filtergehäusemantel 70 und Fixieren des Filterelements 78 an der Stirnwand 76 des Filtergehäuses 72. Sodann wird eine neue Filtertüte 92 über das an seiner Stirnseite geschlossene Ende 94 des Filterelements 78 gestülpt und der Randbereich 90 am offenen Ende des Beutels 92 so über den Rand des Mantelteils 70 nach außen gelegt, dass der Klemmring 88 auf das freie axiale Ende des Mantelteils 70 aufgesetzt werden kann, um den dann vom Filtergehäuse-Innenbereich nach außen verlaufenden Endabschnitt 90 des Beutels 92 dicht festzuklemmen. Sodann wird der Klemmring 88 an dem Mantelteil 70 fixiert und schließlich der Deckel 86 außen auf den Klemmring 88 aufgeschraubt. Der nächste Schritt ist dann das Spülen des Filtergehäuses 72 und des Beutelinneren mit Schutzgas und das Aktivieren des Schutzgaskreislaufs, so dass ein neuer Bauprozess eingeleitet werden kann.

Zum Ausgleich etwaiger Verluste von Schutzgas kann es vorgesehen sein, dass an dem Schutzgaskreislauf eine Schutzgasquelle angeschlossen ist, aus der bedarfsweise zusätzliches Schutzgas, z.B. Argon, entnommen werden kann.

In den Figuren 5 - 6 und 9 ist eine bevorzugte Schichtenpräparierungseinrichtung 15 erkennbar. Die Schichtenpräparierungseinrichtung 15 weist einen Schwenkarm 17 auf, der in einer zur Trägerplattform 14 parallelen horizontalen Ebene aus der in Fig. 5 gezeigten passiven Stellung heraus über die Bauplattform 14 hinweg hin- und herverschwenkbar ist, um mit einem Glättungsschieberelement 16 eine Pulverschicht auf der Trägerplattform 14 glattzustreichen. Das Glättungsschieberelement 16 ist durch den unteren Rand eines in dem Halter 17 aufgenommenen Wechselbehälters 96 für Pulvervorrat gebildet. Der Schwenkarm 17 ist an einer die vertikale Schwenkachse 98 definierenden Welle 100 angeordnet, welche durch den Boden 102 des Prozessraumgehäuses 8 abgedichtet nach unten geführt ist und von einem unter dem Prozessraumgehäuse 8 angeordneten Motor zu Schwenkbewegungen antreibbar ist. Der Schwenkarm 17 könnte ggf. an seinem von der Schwenkachse 98 entfernten Ende mittels eines daran angeordneten Stützelementes in Form einer Rolle oder eines Gleitschuhes am Prozessraumboden 102 oder einer darauf vorgesehenen Führung abgestützt sein.

Das Stützelement kann von Abstreifern begleitet sein, die die Bahn des Stützelementes auf dem Boden 102 jeweils abstreifend reinigen. Die Pulverpräparierungseinrichtung 15 funktioniert hinsichtlich der Glättungsoperation somit nach Art eines "Scheibenwischers". Dabei rieselt Pulver durch einen Austrittsschlitz 109 am unteren Ende des Wechselbehälters 96 aus diesem heraus, um eine neue Pulverschicht zu bilden. Wie in Fig. 10 angedeutet, sind im Inneren des Wechselbehälters 96 Kaskadierungsbleche 104, 106 vorgesehen, welche sicherstellen, dass auf Pulver, welches unmittelbar an der Austrittsöffnung 109 innen anliegt, kein zu großes Gewicht des übrigen Pulvervorrats im Wechselbehälter 96 lastet. Auf diese Weise wird sichergestellt, dass keine zu große Menge an Pulver aus der Ausgabeöffnung 109 des Wechselbehälters 96 bei dessen Bewegungen über das Baufeld hinweg austritt.

Anstelle eines Auslassschlitzes könnten auch mehrere der Reihe nach positionierte Löcher 109 oder ein siebartiges Gebilde an der Unterseite des Behälters 96 vorgesehen sein. Ferner könnte der Behälter 96 Vibrationselemente aufweisen, die ein Schütteln des Pulvers und der Behälterwände zum Zwecke der beschleunigten und gesteuerten Pulverabgabe bewirken.

In den Figuren 5 und 6 ist eine verschließbare Öffnung 110 im Boden 102 des Prozessraumgehäuses 8 zu erkennen. An diese Öffnung 110 ist ein Auffangbehälter für überschüssiges Werkstoffpulver anschließbar.

## Patentansprüche

1. Vorrichtung zur Herstellung von Gegenständen durch schichtweises Aufbauen aus pulverförmigem, insbesondere metallischem oder/und keramischem Werkstoff,
umfassend ein Prozessraumgehäuse (8) mit einem Prozessraum (6), eine Trägeranordnung (14) als Basis für den Schichtaufbau und zur Bereitstellung eines Baufeldes (25) in dem Prozessraum (6),
eine Bestrahlungseinrichtung (18) zur Bestrahlung der jeweils zuletzt auf der Trägeranordnung (14) präparierten Werkstoffpulverschicht in einem dieser Schicht zugeordneten Querschnittsbereich des betreffenden herzustellenden Gegenstandes (2) mit Strahlung, die das Werkstoffpulver in diesem Querschnittsbereich durch Erhitzen zum Verschmelzen oder ggf. zum Versintern bringt,
eine Schutzgasfördereinrichtung (32, 34, 38, 40, 42, 50) zum Durchleiten von Schutzgas durch den Prozessraum (6),
eine Schichtenpräparierungseinrichtung (15) zum Präparieren einer jeweils nachfolgend mittels der Bestrahlungseinrichtung (18) ortsselektiv zu bestrahlenden Schicht des pulverförmigen Werkstoffs, wobei die Schichtenpräparierungseinrichtung (15) einen im Abstand der gewünschten Pulverschichtdicke über der zuletzt bestrahlten Schicht hinweg bewegbaren Glättungsschieber (16) zur Einebnung einer jeweiligen Menge an Werkstoffpulver über der zuletzt bestrahlten Schicht aufweist, **dadurch gekennzeichnet dass**
der Glättungsschieber (16) an einem radial von einer vertikalen Schwenkachse (98) abstehenden und um die Schwenkachse (95) schwenkbaren Halter (17) vorgesehen ist.

2. Vorrichtung zur Herstellung von Gegenständen nach Anspruch 1, **dadurch gekennzeichnet, dass** der Pulverspender (96) ein Wechselbehälter ist, der in eine Wechselbehälteraufnahme des Halters (17) lösbar eingesetzt ist.

3. Vorrichtung zur Herstellung von Gegenständen nach Anspruch 1 oder 2, **dadurch gekennzeichnet, dass** der Pulverspender (96) an seinem unteren Ende Elemente des Glättungsschiebers (16) aufweist.

## Claims

1. Device for manufacturing objects by a layered construction using a powdery, in particular metallic or/and ceramic material,
comprising a process room housing (8) with a process room (6) and a carrier arrangement (14) as a basis for the layered construction and for providing a construction zone (25) in the process room (6),
an irradiation device (18) for irradiating the material powder on the last layer prepared on the carrier arrangement (14) in a cross-sectional area of the object to be manufactured (2) associated to that layer, by irradiation leading to melting or sintering of the material powder in this cross-sectional area by heating,
a protection gas transport device (32, 34, 38, 40, 42, 50) for transporting a protection gas to the process room (6),
a layer preparation device (15) for preparing a layer of the powdery material which will subsequently be irradiated selectively in certain places by said irradiation device (18), the layer preparation device (15) comprising a smoothing bar (16) which can be moved to and fro across the last layer irradiated at a distance of the desired powder layer thickness for levelling a certain amount of material powder on the last layer irradiated, **characterized by** the smoothing bar (16) being provided at a support (17) which projects radially from a vertical pivoting axle (98) and can be pivoted about the pivoting axis (95).

2. Device for manufacturing objects according to claim 1, **characterized by** the powder dispenser (96) being an interchangeable container which is releasably inserted into an interchangeable container mount of the support (17).

3. Device for manufacturing objects according to claim 1 or 2, **characterized by** the powder dispenser (96) comprising elements of the smoothing bar (16) at its lower end.

## Revendications

1. Dispositif de fabrication d'objets par montage en couche à partir d'un matériel en poudre, en particulier d'un matériel métallique ou/et céramique, comprenant un boîtier de chambre de procédés (8) avec une chambre de procédés (6), un arrangement de support (14) en tant que base pour le montage en couche et pour prévoir une zone de construction (25) dans la chambre de procédés (6),
un dispositif d'irradiation (18) pour appliquer à la couche de matériel en poudre qui a été appliquée en dernier sur l'arrangement de support (14) dans une zone de section transversale de l'objet à fabriquer (2) associée à cette couche, une irradiation qui fait fondre le matériel en poudre dans cette zone de section transversale ou mène à un frottage par chauffage,
un dispositif de transport de gaz de protection (32, 34, 38, 40, 42, 50) pour transporter du gaz de protection à travers la chambre de procédés (6),
un dispositif de préparation de couches (15) pour préparer une couche du matériel en poudre qui va être irradiée de manière localisée par le dispositif d'irradiation (18), le dispositif de préparation de couches (15) comprenant un racleur de lissage (16), qui peut être déplacé en va et vient au-dessus de la couche irradiée en dernier avec une distance correspondant à l'épaisseur désirée de la couche de poudre, pour niveler une certaine quantité de matériel en poudre au-dessus de la couche irradiée en dernier, **caractérisé par** le racleur de lissage (16) étant prévu à un support (17) qui s'étend radialement à partir d'un axe de pivotement vertical (98) et peut être pivoté autour de l'axe de pivotement (95).

2. Dispositif de fabrication d'objets par montage en couche selon la revendication 1, **caractérisé par** le distributeur de poudre (96) étant un conteneur interchangeable qui est inséré de manière libérable dans un logement de < conteneur interchangeable du support (17).

3. Dispositif de fabrication d'objets par montage en couche selon la revendication 1 ou la revendication 2, **caractérisé par** le distributeur de poudre (96) comprenant à son extrémité inférieure des éléments du racleur de lissage (16).
